# EUROPÄISCHE PATENTSCHRIFT

(11) **EP 3 059 462 B1**
(45) Veröffentlichungstag und Bekanntmachung des Hinweises auf die Patenterteilung: **03.05.2017**
(21) Anmeldenummer: 15155819.4
(22) Anmeldetag: 19.02.2015
(51) Int. Cl.: F16C 11/10, E04B 1/19, F16M 11/14

(54) **VERBINDUNG ZWEIER ADAPTERTEILE EINER MODULAR AUFBAUBAREN TRAGVORRICHTUNG**
CONNECTION OF TWO ADAPTER SECTIONS OF A MODULAR SUPPORT STRUCTURE
LIAISON DE DEUX PIÈCES D'ADAPTATION D'UN DISPOSITIF DE SUPPORT MODULAIRE

(43) Veröffentlichungstag der Anmeldung: 24.08.2016
(73) Patentinhaber: UNIVER S.p.A., 20128 Milano (IT)
(72) Erfinder: Migliori, Luciano, 20128 Milano (IT)
(74) Vertreter: Quermann, Helmut

(56) Entgegenhaltungen:
- EP-A1- 2 778 492
- US-A- 5 660 366
- US-B1- 6 328 269
- US-B1- 6 386 786

## Beschreibung

Die Erfindung betrifft eine Verbindung zweier Adapterteile einer modular aufbaubaren Tragvorrichtung zum Tragen von Werkzeugen, Werkstücken oder dergleichen.

Tragvorrichtungen dienen insbesondere zum Anbringen an Roboterarmen und für die Anbindung von Werkzeugen, wie Spann-, Greif-, Saugeinrichtungen und sonstigen Hilfsmitteln, wie Ventilen, Sensoren oder dergleichen. Hierbei finden Stangenteile Verwendung, die mittels Adaptern verbindbar sind.

Eine Verbindung zweier Adapterteile einer modular aufbaubaren Tragvorrichtung ist in der EP 2 778 492 A1 beschrieben. Bei dieser Verbindung weist das jeweilige Adapterteil einen Ansatz auf. Ferner ist eine Verbindungsschelle vorgesehen, die die aufeinander zugewandt positionierten Ansätze auf einander abgewandten Seiten der Ansätze hintergreift und die Ansätze axial und radial zueinander festlegt. Die Ansätze sind auf deren zugewandten Seiten eben ausgebildet und kreisförmig gestaltet. Unter Einwirkung der Verbindungsschelle werden die beiden Ansätze gegeneinander verspannt. Die Verbindungsschelle weist zwei Schenkel auf, die gelenkig miteinander verbunden sind. Im Bereich der dem Gelenk abgewandten Enden der Schenkel weist die Verbindungsschelle Mittel zum Verbinden der beiden Schenkel bei in Schließstellung befindlichen Schenkeln auf.

Aus der Praxis sind Verbindungen zweier Adapterteile einer modular aufbaubaren Tragvorrichtung zum Tragen von Werkzeugen, Werkstücken oder dergleichen bekannt, bei denen eines der Adapterteile einen kugelförmigen Ansatz aufweist, der in einer Verbindungsschelle des anderen Adapterteils klemmend gehalten wird. Eine derart gestaltete Kugelanbindung ist nicht geeignet, große Verbindungskräfte der beiden Adapterteile bereitzustellen, womit diese Verbindung nur für modular aufbaubare Tragvorrichtungen geeignet ist, bei denen die Werkzeuge, Werkstücke oder dergleichen ein relativ geringes Gewicht aufweisen.

Aufgabe der vorliegenden Erfindung ist es, eine Verbindung zweier Adapterteile einer modular aufbaubaren Tragvorrichtung zum Tragen von Werkzeugen, Werkstücken oder dergleichen zu schaffen, mit der sicher relativ große Gewichte von der Tragvorrichtung aufgenommen werden können.

Gelöst wird die Aufgabe durch eine Verbindung zweier Adapterteile, die gemäß den Merkmalen des Patentanspruchs 1 ausgebildet ist.

Die erfindungsgemäße Verbindung weist ein erstes Adapterteil, ein zweites Adapterteil und eine Verbindungsschelle zum Verbinden der beiden Adapterteile auf. Hierbei ist das erste Adapterteil mit einem endseitigen Ansatz mit einer teilkugelförmigen Ausnehmung versehen. Das zweite Adapterteil ist mit einem endseitigen kugelförmigen Ansatz zum Einsetzen in die teilkugelförmige Ausnehmung des ersten Adapterteils sowie einem am kugelförmigen Ansatz anliegenden Klemmring versehen. Dieser Klemmring liegt am kugelförmigen Ansatz auf dessen der teilkugelförmigen Ausnehmung abgewandten Hälfte an. Die Verbindungsschelle hintergreift den Ansatz des ersten Adapterteils und den Klemmring des zweiten Adapterteils auf einander abgewandten Seiten. Dabei legt die Verbindungsschelle den Ansatz des ersten Adapterteils und den Klemmring des zweiten Adapterteils radial und axial zueinander fest. Der Ansatz des ersten Adapterteils und der Klemmring des zweiten Adapterteils weist jeweils mindestens einen Schwächungsbereich zum Verformen von Ansatz des ersten Adapterteils und Klemmring bei Einwirkung auf diese mittels der Verbindungsschelle auf.

Diese erfindungsgemäße Verbindung der beiden Adapterteile ermöglicht einerseits eine genaue Positionierung der beiden Adapterteile zueinander, und zwar in unterschiedlichen Winkellagen aufgrund des Zusammenwirkens von kugelförmigem Ansatz und teilkugelförmiger Ausnehmung. Andererseits führen die Schwächungsbereiche im Ansatz des ersten Adapterteils und im Klemmring dazu, dass diese Bauelemente elastischer werden und sich bei Einwirkung über die Verbindungsschelle anpassen können. Die beiden Adapterteile können somit mit besonders hohem Wirkungsgrad reibschlüssig miteinander verbunden werden, mit der Konsequenz, dass sie besonders geeignet sind, relativ hohe Momente, die zwischen diesen zu übertragen sind, aufzunehmen. Demzufolge kann die Tragvorrichtung mit Werkzeugen, Werkstücken oder dergleichen, die ein relativ großes Gewicht besitzen, bestückt werden. Bei Verwendung der Kugelanbindungen ist die Tragvorrichtung nicht nur für leichte Elemente, die keine so genaue Positionierung erfordern, beispielsweise für Proximity Switches oder Sauger geeignet, sondern insbesondere als Anbindung für Greiferrahmen, vorzugsweise im Presswerk.

Gemäß einer bevorzugten Weiterbildung der Erfindung ist vorgesehen, dass die Ausnehmung im ersten Adapterteil halbkugelförmig ausgebildet ist. Der kugelförmige Ansatz des zweiten Adapterteils ist insbesondere als Kugel ausgebildet, bis auf den diskreten Bereich, in dem die Kugel befestigt ist. Durch diese Gestaltungen lassen sich relativ große Kontaktflächen verwirklichen, die die Basis für die Übertragung der Reibkräfte und damit resultierender Drehmomente sind.

Vorzugsweise sind auch die Kontaktflächen von kugelförmigem Ansatz und Klemmring aneinander angepasst. Dies ermöglicht es, relativ hohe Kräfte vom Klemmring in den kugelförmigen Ansatz bei Einwirkung der Verbindungsschelle zu übertragen.

Gemäß einer bevorzugten Weiterbildung der Erfindung ist vorgesehen, dass bei der Verbindung der Ansatz des ersten Adapterteils und der Klemmring jeweils mehrere Schwächungsbereiche aufweisen. Diese mehreren Schwächungsbereiche ermöglichen eine besonders elastische Ausbildung von Ansatz des ersten Adapterteils und des Klemmrings. Hierdurch lassen sich die zu übertragenden Klemmkräfte bzw. Klemmmomente optimieren.

Insbesondere ist die Verbindung dahingehend weitergebildet, dass der Ansatz des ersten Adapterteils Schwächungsbereiche, die als ein oder mehrere Schlitze im Ansatz ausgebildet sind, aufweist, wobei der jeweilige Schlitz im Ansatz sich senkrecht zur Wirkebene der Verbindungsschelle erstreckt.

Somit erstreckt sich der jeweilige Schlitz im ersten Ansatz in einer Richtung vom Verbindungsbereich der beiden Adapterteile weg in den Ansatz des ersten Adapterteils hinein. Durch diese Erstreckung erfolgt eine weitere Optimierung der Elastizität des Ansatzes des ersten Adapterteils.

Es ist insbesondere vorgesehen, dass der jeweilige Schlitz sich senkrecht zur Wirkebene der Verbindungsschelle bis außerhalb des Einwirkbereichs der Verbindungsschelle auf den Ansatz des ersten Adapterteils erstreckt. Der jeweilige Schlitz erstreckt sich damit über eine relativ große Tiefe des Ansatzes des ersten Adapterteils, bis außerhalb des Einwirkbereichs der Verbindungsschelle auf den Ansatz.

Vorzugsweise erstreckt sich der jeweilige Schlitz senkrecht zur Wirkebene der Verbindungsschelle über die gesamte Tiefe der teilkugelförmigen Ausnehmung.

Gemäß einer bevorzugten Weiterbildung ist vorgesehen, dass sich der jeweilige Schlitz radial von der teilkugelförmigen Ausnehmung im ersten Adapterteil bis zur radial äußeren Begrenzung des ersten Adapterteils, bezogen auf dessen Kontaktbereich mit der Verbindungsschelle, erstreckt. Auch diese Ausbildung des jeweiligen Schlitzes trägt zur gesteigerten Elastizität des ersten Adapterteils im Bereich der kugelförmigen Ausnehmung bei.

Es wird als besonders vorteilhaft angesehen, wenn die Verformung des ersten Adapterteils im Bereich der teilkugelförmigen Ausnehmung gleichmäßig erfolgt. Dies gewährleistet, dass im gesamten Bereich der teilkugelförmigen Ausnehmung diese mit nahezu identischer Flächenpressung am kugelförmigen Ansatz des zweiten Adapterteils, bei Einwirkung der Verbindungsschelle auf den Klemmring, einwirkt. Unter diesem Aspekt ist insbesondere vorgesehen, dass benachbarte Schlitze des ersten Adapterteils im selben Kreiswinkel zueinander angeordnet sind. Insbesondere sind vier Schlitze vorgesehen, die somit unter einem Kreiswinkel von 90° zueinander angeordnet sind.

Es wird als vorteilhaft angesehen, wenn der Ansatz des ersten Adapterteils auf seiner dem zweiten Adapterteil zugewandten Seite eine ebene Oberfläche aufweist, sowie der Klemmring des zweiten Adapterteils auf seiner dem Ansatz des ersten Adapterteils zugewandten Seite eine ebene Oberfläche aufweist, wobei diese ebenen Oberflächen parallel zueinander angeordnet sind, insbesondere die beiden Adapterteile sich im Bereich dieser Oberflächen kontaktieren. Diese Gestaltung ermöglicht die Übertragung besonders hoher Kräfte zwischen den beiden Adapterteilen.

Eine sich auf die Ausbildung des Klemmrings beziehende Weiterbildung der Erfindung sieht vor, dass der Klemmring in einem Ringbereich des Klemmrings mittels eines sich radial erstreckenden Schlitzes unterbrochen ist. Somit ist der Klemmring radial geteilt, demnach in diesem Bereich geschwächt, und kann sich bei Einwirkung der Spannkraft der Verbindungsschelle im Durchmesser anpassen, konkret unter Einwirkung der Verbindungsschelle im Durchmesser reduzieren, zwecks Klemmung zwischen der Verbindungsschelle und dem zumindest kreisförmigen Ansatz des zweiten Adapterteils.

Als besonders vorteilhaft wird eine Gestaltung des Klemmrings angesehen, bei der der Klemmring einen Schwächungsbereich aufweist, der durch mindestens einen sich über einen Teil der radialen Stärke des Klemmrings erstreckenden Schlitz im Klemmring gebildet ist. Insbesondere ist dieser sich radial erstreckende Schlitz zusätzlich zu dem vorbeschriebenen, den Klemmring unterbrechenden Schlitz vorgesehen. Somit sind im Bereich des Klemmrings mehrere Schwächungsstellen ausgebildet, die es ermöglichen, eine für die Übertragung von Kräften und Momenten wichtige elastische Verformung des Klemmrings zu gewährleisten.

Es wird als besonders vorteilhaft unter dem Aspekt der optimierten Elastizität des Klemmrings angesehen, wenn in dem genannten Schwächungsbereich mit den sich über einen Teil der radialen Stärke des Klemmrings erstreckenden Schlitzen mehrere, insbesondere zwei Schlitze gebildet sind, wobei der eine Schlitz von radial innen in den Klemmring ragt und der andere Schlitz von radial außen in den Klemmring ragt. Auch diese Gestaltung trägt zu einer Erhöhung der elastischen Verformbarkeit des Klemmrings bei.

Insbesondere sind der den Klemmring unterbrechende Schlitz und mindestens ein weiterer Schlitz des Klemmrings diametral angeordnet. Insbesondere ist vorgesehen, dass sich die Schlitze im Klemmring über dessen axiale Erstreckung erstrecken.

Um Verbindungskräfte zwischen den beiden Adapterteilen optimal übertragen zu können, liegt der Klemmring zumindest hinter dem Scheitelbereich der Kugel des Ansatzes des zweiten Adapterteils, bezogen auf die dem endseitigen Ansatz des ersten Adapterteils abgewandte Hälfte, am kugelförmigen Ansatz des zweiten Adapterteils an. Unter dem Aspekt der Schwächungsbereiche von erstem Adapterteil und Klemmring, die deren elastische Verformung ermöglichen, kann sich der Klemmring durchaus in den anderen, somit dem ersten Adapterteil zugewandten Bereich vor dem Scheitel der Kugel des teilkugelförmigen Ansatzes erstrecken.

Weitere Merkmale der Erfindung sind in den Unteransprüchen, der Beschreibung der Figuren sowie den Figuren selbst dargestellt.

In den Figuren ist die Erfindung anhand eines Ausführungsbeispiels einer Tragvorrichtung, die diverse jeweils paarweise verbundene Adapterteile aufweist, beschrieben, ohne auf das beschriebene Ausführungsbeispiel beschränkt zu sein.

Es zeigt:
- Fig. 1: eine aus einzelnen Modulen aufgebaute Tragvorrichtung, veranschaulicht in einer räumlichen Darstellung,
- Fig. 2: einen Teilbereich der Tragvorrichtung nach Fig. 1, mit veranschaulichter Verbindung zweier Adapterteile, gezeigt in einer räumlichen Darstellung,
- Fig. 3: eines der Adapterteile ohne Klemmring, veranschaulicht in einer räumlichen Darstellung,
- Fig. 4: der Klemmring dieses Adapterteils, veranschaulicht in einer räumlichen Darstellung,
- Fig. 5: das andere Adapterteil, veranschaulicht in einer räumlichen Darstellung,
- Fig. 6: das eine Adapterteil, gezeigt bei den kugelförmigen Ansatz dieses Adapterteil kontaktierendem Klemmring, veranschaulicht in einer Seitenansicht,
- Fig. 7: die Anordnung gemäß Fig. 6, veranschaulicht in einer Stirnansicht,
- Fig. 8: die Anordnung gemäß der Fig. 6 und 7, veranschaulicht in einer räumlichen Darstellung,
- Fig. 9 bis 11: Montageschritte zur Verbindung der beiden Adapterteile,
- Fig. 12: die in Fig. 2 gezeigte Verbindung der beiden Adapterteile, gezeigt in einer anderen Winkelstellung der Adapterteile zueinander,
- Fig. 13: eine Draufsicht der in Fig. 12 gezeigten Verbindung,
- Fig. 14: ein Schnitt durch die Verbindung gemäß der Linie A-A in Fig. 13,
- Fig. 15: ein bei der Tragvorrichtung gemäß Fig. 1 Verwendung findendes modifiziertes Adapterteil, gezeigt in einer räumlichen Darstellung.

### Figurenbeschreibung

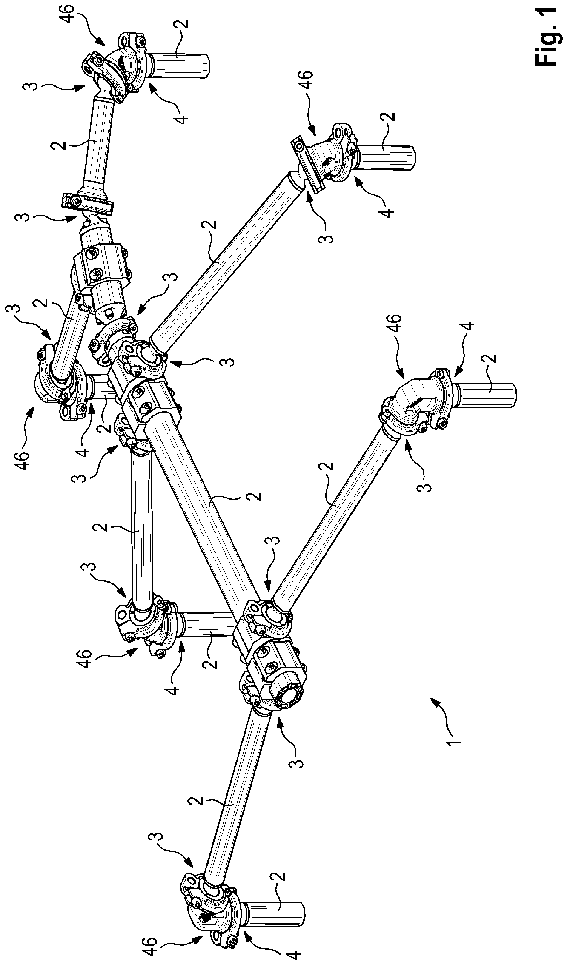

Fig. 1 zeigt eine modular aufgebaute Tragvorrichtung 1 zum Tragen von Werkzeugen, Werkstücken oder dergleichen. Diese Tragvorrichtung 1 findet insbesondere Verwendung im Bereich der Kraftfahrzeugindustrie.

Die Tragvorrichtung 1 weist eine Vielzahl von Stangen 2 auf, die mittels Adapterteilen miteinander verbunden sind. Hierbei können aufgrund der Ausbildung der Adapterteile mit diesen zusammenwirkende Stangen 2 im unterschiedlichen Winkel zueinander angeordnet werden, entsprechend den konkreten Erfordernissen betreffend die Platzierung der Werkzeuge, Werkstücke oder dergleichen.

Das jeweilige Adapterpaar, das durch zwei Adapterteile gebildet ist, die miteinander zusammenwirken und eine Anordnung der Adapterteile in unterschiedlicher Winkelstellung zueinander gestatten, ist mit der Bezugsziffer 3 bezeichnet. Andere Adapterpaare, bei denen die Adapterteile nicht beliebig zueinander positionierbar sind, sind mit der Bezugsziffer 4 bezeichnet. Die Verbindung dieser Adapterteile der Adapterpaare 4 erfolgt, wie in der EP 2 778 492 A1 beschrieben.

Im Bereich diverser Stangen 2 erfolgt die Befestigung der Werkzeuge, Werkstücke oder dergleichen, je nach den Erfordernissen, die an die modular aufgebaute Tragvorrichtung 1 gestellt werden.

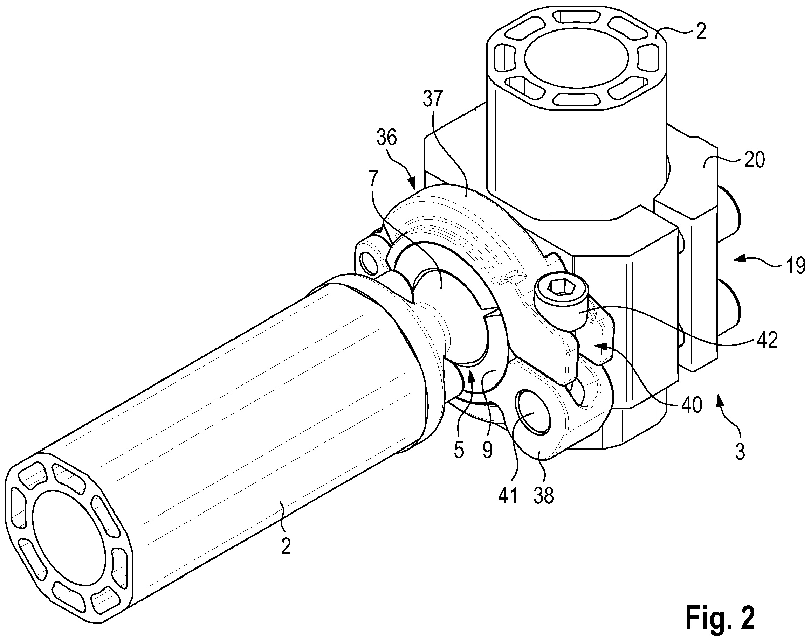

Fig. 2 veranschaulicht ein Adapterpaar 3 zum Verbinden zweier Stangen 2. Die jeweilige Stange 2 ist als Stranggussprofil, insbesondere aus Aluminium bestehend, ausgebildet und weist einen mehreckigen, geregelten Querschnitt auf.

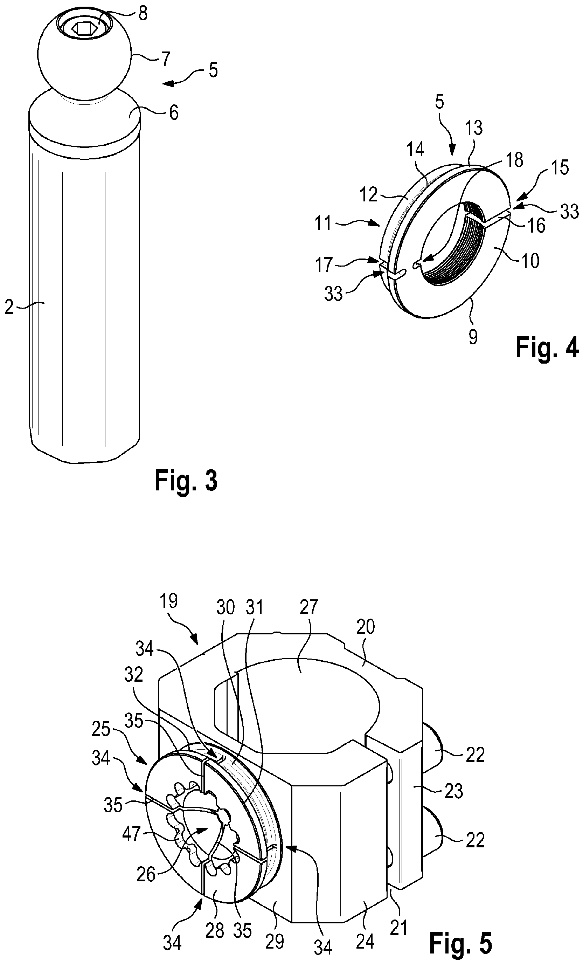

Wie der Darstellung der Fig. 3 zu entnehmen ist, ist mit der Stange 2 ein Teil eines Adapterteils 5 verbunden. Dieses weist einen Sockel 6 auf, der in die Stange 2 eingesteckt und mit dieser fest verbunden ist. Diese Verbindung kann auf unterschiedliche Art und Weise erfolgen, beispielsweise durch Einpressen des Sockels 6 in die Stange 2 oder Verschrauben des Sockels 6 mit der Stange 2. Bestandteil dieses Teils des Adapterteils 5 ist ferner ein kugelförmiger Ansatz 7, der mittels einer Schraube 8 mit dem Sockel 6 verschraubt ist. Hierzu weist der kugelförmige Ansatz 7, auf der dem Sockel 6 abgewandten Seite, eine Ausnehmung zur Aufnahme eines Kopfes der Schraube 8 auf. Die Stange 2 kann eine beliebige Länge aufweisen, entsprechend den Anforderungen im Zusammenhang mit der Anbringung eines oder mehrerer Werkzeuge, Werkstücke oder dergleichen an der Stange 2.

Bestandteil des Adapterteils 5 bildet ferner ein Klemmring 9, der in Fig. 4 veranschaulicht ist. Dieser ist, abgesehen von den anschließend noch im Detail zu beschreibenden Modifizierungen, als rotationssymmetrischer Körper ausgebildet, mit parallelen Stirnflächen 10, 11 und bezüglich der Längsmittelachse des Klemmrings 9 achsparallelen Umfangsflächen 12, 13, wobei die Umfangsfläche 13 an die Stirnflächen 10 und die Umfangsfläche 12 an die Stirnfläche 11 angrenzt. Hierbei ist der Außenradius der Umfangsfläche 13 größer als der der Umfangsfläche 12. Zwischen den beiden Umfangsflächen 12, 13 weist der Klemmring 9 eine sich konisch erweiternde Umfangsfläche 14 auf. Der insoweit beschriebene Klemmring 9 ist in einem Ringbereich 15 mittels eines sich radial erstreckenden Schlitzes 16 unterbrochen. Ferner weist der Klemmring 9, diametral zum Schlitz 16, zwei weitere Schlitze auf, nämlich einen radial äußeren Schlitz 17 und einen radial inneren Schlitz 18. Die Schlitze 17, 18 erstrecken sich über die gesamte Stärke des Klemmrings 9, somit über die Erstreckung des Klemmrings 9 in dessen Achsrichtung. Der Schlitz 17 ragt von radial außen in den Kemmring 9 und der Schlitz 18 von radial innen in den Klemmring 9.

Die geschwächte Ausbildung des Klemmrings 9 aufgrund des Schlitzes 16 erlaubt es, den Klemmring 9 elastisch zu verformen, derart, dass sich die im Bereich des Schlitzes 16 befindlichen Stirnflächen des Klemmrings 9 bis zu deren Kontakt bei Einleitung einer Kraft in den Klemmring 9 nähern. Diese elastische Verformung des Klemmrings 9 wird vereinfacht durch die zusätzliche Schwächung des Klemmrings 9 im Bereich der Schlitze 17, 18.

Fig. 5 veranschaulicht das andere Adapterteil 19 des Adapterpaars 3. Das Adapterteil 19 weist einen Durchgang zur Aufnahme einer Stange 2 auf. Ein Basisabschnitt 20 des Adapterteils 19 ist mit einem Schlitz 21 versehen. Im Bereich dieses Schlitzes 21 durchsetzen zwei Schrauben 22 einen Schenkel 23 des Adapterteils 19 und sind in Gewindebohrungen eines anderen Schenkels 24 des Adapterteils 19 eingeschraubt. Durch Anziehen der Schrauben 22 lässt sich eine in den Basisabschnitt 20 eingesteckte Stange mit dem Adapterteil 19 in beliebiger Axialposition der Stange 2 verspannen.

Bestandteil des Adapterteils 19 bildet ferner ein endseitiger Ansatz 25, der eine teilkugelförmige Ausnehmung 26 aufweist. Der Ansatz 25 ist grundsätzlich scheibenförmig gestaltet und weist eine der Aufnahme 27 für die Stange 2 abgewandte Stirnfläche 28 auf. Diese ist parallel zu einer Stirnfläche 29 des Basisabschnitts 20 angeordnet. Der Außendurchmesser des Ansatzes 25 im Bereich der Stirnfläche 28 entspricht dem Außendurchmesser des Klemmrings 9 im Bereich dessen Stirnfläche 10. Ausgehend von der Stirnfläche 28 sind bezüglich des Ansatzes 25 achsparallele Umfangsflächen 30, 31 im Ansatz 25 ausgebildet, deren Außendurchmesser dem Außendurchmesser der Umfangsflächen 12 und 13 des Klemmrings 9 entspricht. Entsprechend der konisch angeordneten Umfangsfläche 14 des Klemmrings 9 weist der Ansatz 25 eine konische Umfangsfläche 32 auf, die die Umfangsflächen 30 und 31 miteinander verbindet.

Nicht nur der Klemmring 9 weist die Schwächungsbereiche 33, bedingt durch den Schlitz 16 sowie die Schlitze 17, 18 auf, sondern es ist auch der Ansatz 25 mit Schwächungsbereichen 34 versehen. Zur Ausbildung dieser Schwächungsbereiche 34 weist der Ansatz 25 vier Schlitze 35 auf, die identisch ausgebildet sind und sich von der Stirnfläche 28 bis nahezu zur Stirnfläche 29 des Basisabschnitts 20 erstrecken. Benachbarte Schlitze nehmen, bezogen auf den Gesamtkreis des Ansatzes 25, einen Winkel von 90° zueinander ein. Der jeweilige Schlitz 35 im Ansatz 25 erstreckt sich senkrecht zur Wirkebene einer nachfolgend noch näher zu beschreibenden Verbindungsschelle, somit senkrecht zur Stirnfläche 28 des Ansatzes 25. Im Detail erstreckt sich der jeweilige Schlitz 35 über die gesamte Tiefe der teilkugelförmigen Ausnehmung 26. Radial erstreckt sich der jeweilige Schlitz 35 von der teilkugelförmigen Ausnehmung 26 bis zur radial äußeren Begrenzung des Ansatzes 25, mündet somit in die Umfangsfläche 31.

Die Ausbildung des Ansatzes 25 mit den vier Schlitzen 35 ermöglicht eine elastische Verformung des Ansatzes 35 bei Einwirkung von Befestigungskräften zum Verbinden der beiden Adapterteile 5, 19.

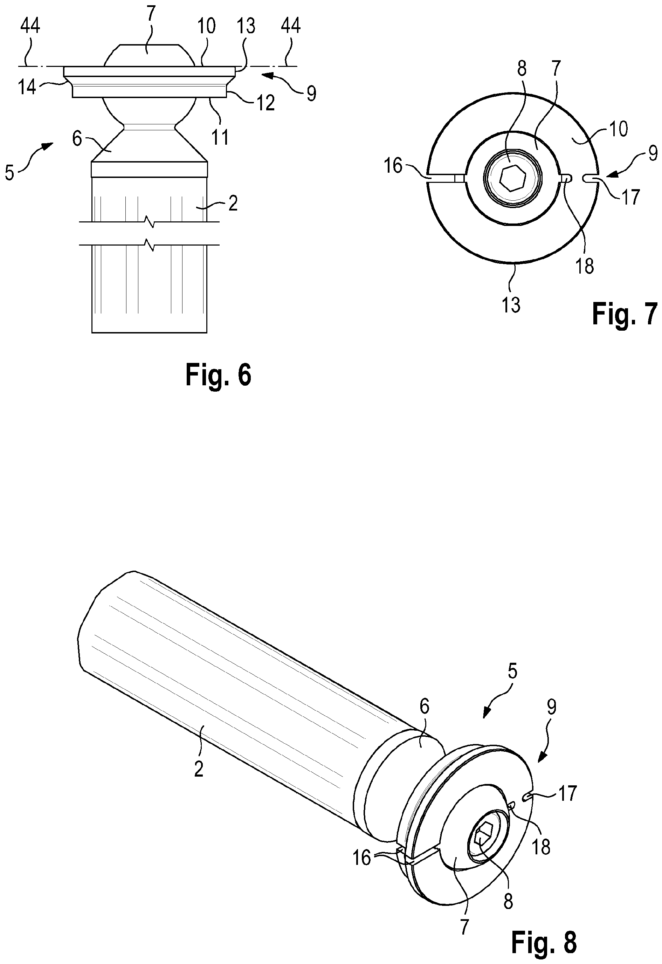

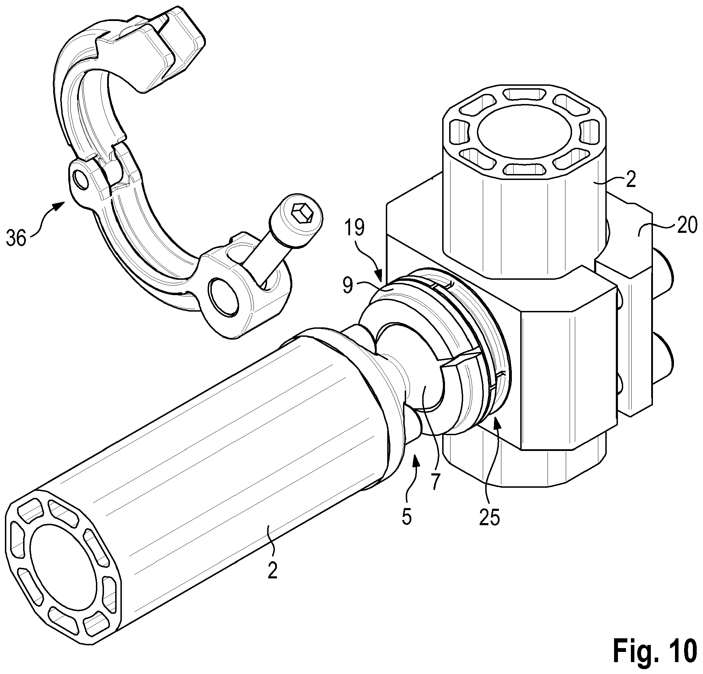

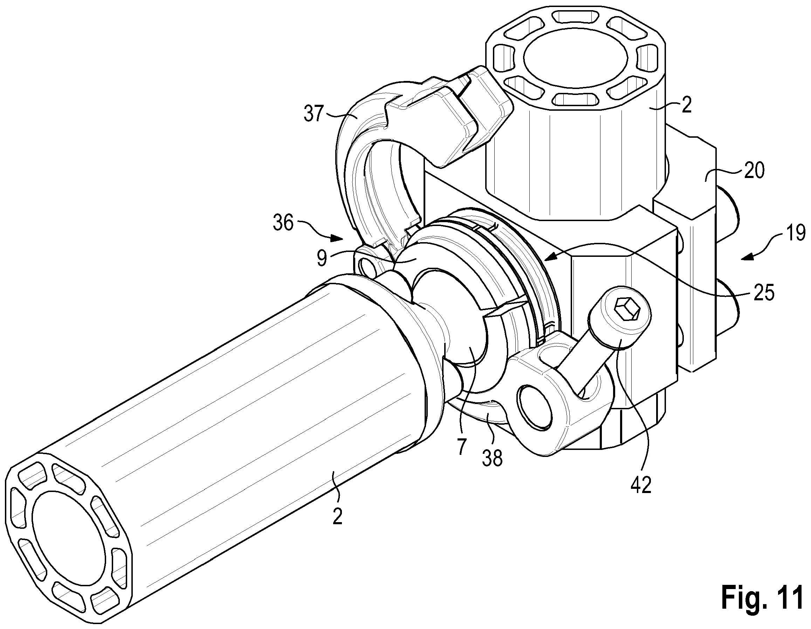

Die Montage der beiden Adapterteile 5, 19 zur Schaffung der Verbindung gemäß Fig. 2, ist in den Fig. 6 bis 11 beschrieben:

In den Fig. 6 bis 8 ist veranschaulicht, dass zunächst das Adapterteil 5 gebildet wird, indem der Klemmring 9 auf den kugelförmigen Ansatz 7 gesteckt wird. Um Kräfte vom Klemmring 9 auf den kugelförmigen Ansatz 7 im Bereich derjenigen Seite des Ansatzes 7 übertragen zu können, die dem Sockel 6 zugewandt ist, ist der Klemmring 9 so ausgebildet und wird derart positioniert, dass der Klemmring 9 am kugelförmigen Ansatz 7 auf dessen dem Sockel 6 zugewandten Hälfte anliegt. Der Klemmring 9 liegt auch im Scheitelbereich des kugelförmigen Ansatzes 7 an und erstreckt sich über diesen Scheitelbereich hinweg, wie es insbesondere der Darstellung der Fig. 6 zu entnehmen ist.

Der kugelförmige Ansatz 7 ist bezüglich dessen Außenkontur der Innenkontur der teilkugelförmigen Ausnehmung 26 angepasst, sodass der Ansatz 7, bei montierter Verbindung, die Ausnehmung 26 flächig kontaktiert.

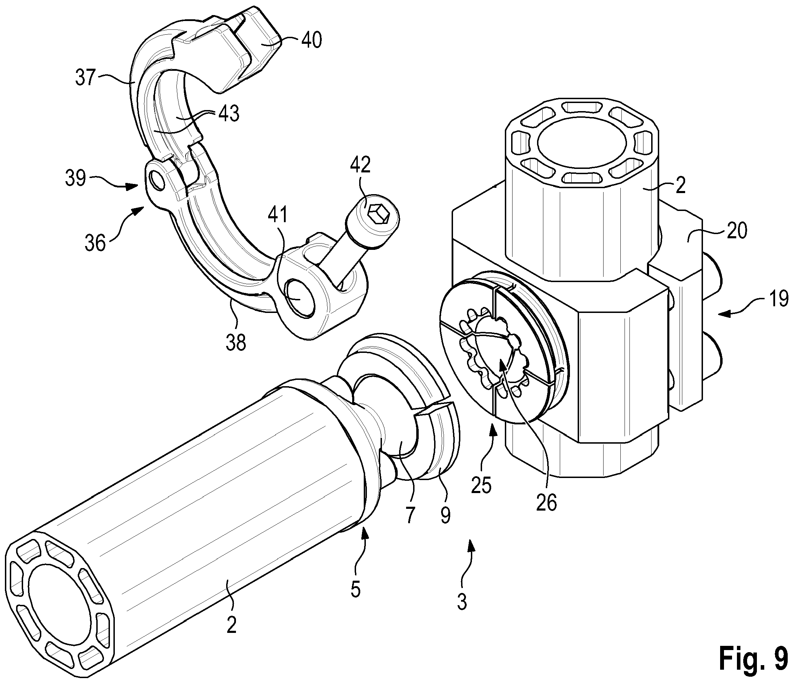

Das gemäß der Darstellung der Fig. 6 bis 8 vormontierte Adapterteil 5 wird anschließend in Position zum Adapterteil 19 gebracht, wie es in Fig. 9 veranschaulicht ist.

Zum axialen und radialen Festlegen der Adapterteile 5, 19 in variabler Winkelstellung zueinander aufgrund des Kugelgelenkes, ist eine Verbindungsschelle 36 vorgesehen. Diese weist zwei Schenkel 37, 38 auf. Die beiden Schenkel sind mittels eines Gelenks 39 miteinander verbunden. Der Schenkel 37 weist im Bereich seines dem Gelenk 39 abgewandten Endes einen U-förmigen Lageransatz 40 auf. Der andere Schenkel 38 nimmt im Bereich seines dem Gelenk 39 abgewandten Endes einen parallel zum Gelenk angeordneten Lagerbolzen 41 schwenkbar auf, in den eine nicht veranschaulichte Gewindebohrung eingebracht ist, in die eine Schraube 42, die als Innensechskantschraube ausgebildet ist, eingeschraubt ist. Bei in Schließstellung befindlicher Verbindungsschelle 36, wenn die Schenkel 37, 38 aufeinander zu geschwenkt sind, wird die Schraube 42 in den U-förmigen Lageransatz 40 eingeschwenkt und es hintergreift der Kopf der Schraube 42 dort den Schenkel 37. Durch Einschrauben der Schraube 42 werden die Schenkel 37, 38 der Verbindungsschelle 36 weiter aufeinander zu bewegt und dienen so dem Verbinden von Klemmring 9 und damit kugelförmigem Ansatz 7 mit dem Ansatz 25, wobei der kugelförmige Ansatz 7 die teilkugelförmige Ausnehmung 26 kontaktiert.

Es wird somit, ausgehend von der Darstellung in Fig. 9, das Adapterteil 5 mit dem kugelförmigen Ansatz 7 in die teilkugelförmige Ausnehmung 26 des Adapterteils 19 eingesteckt. Anschließend wird die geöffnete Verbindungsschelle 26 im Bereich der Umfangsfläche 14 des Klemmrings 9 und der Umfangsfläche 32 des Ansatzes 25 an diese angelegt, wobei Kontaktflächen 43 der Schenkel 37, 38 entsprechend den Klemmflächen - Umfangsflächen 14, 32 von Klemmring 9 und 25 - geneigt sind und an diesen anliegen. Bei geschlossener Verbindungsschelle 36 und Spannen der Schraube 42 schließt sich die Verbindungsschelle 36 zunehmend, womit sich der Wirkdurchmesser in der Wirkebene 44 der Verbindungsschelle 36 geringfügig reduziert und diese demzufolge über die Kontaktflächen 43 auf die Umfangsflächen 14, 32 einen Druck ausübt, mit der Folge, dass sich die mit den Schlitzen 16 bis 18 und 35 versehenen Adapterteile 4, 19 elastisch verformen. Vor diesem Anziehen der Schraube 42 werden die beiden Adapterteile 5 und 19 über das Kugelgelenk in der gewünschten Position ausgerichtet.

Durch die elastisch nachgiebige Ausbildung der Adapterteile 5, 19 im Bereich deren Schlitze 16 bis 18 bzw. 35 lässt sich eine hohe Spannkraft zwischen den beiden Adapterteilen 5, 19 erreichen und es können damit hohe Momente zwischen den Adapterteilen aufgrund der festen Kugelverbindung übertragen werden.

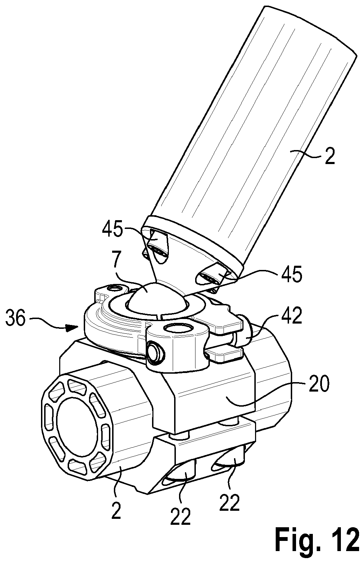

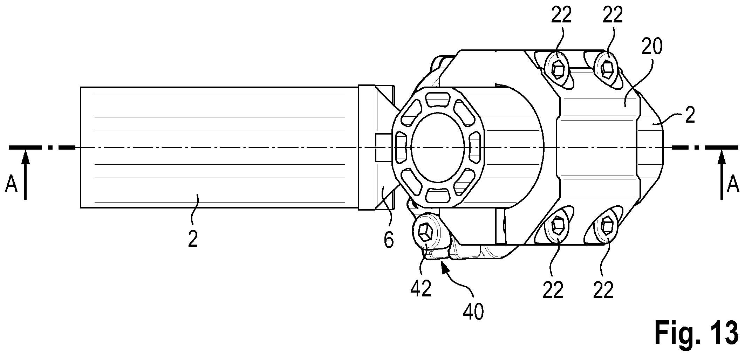

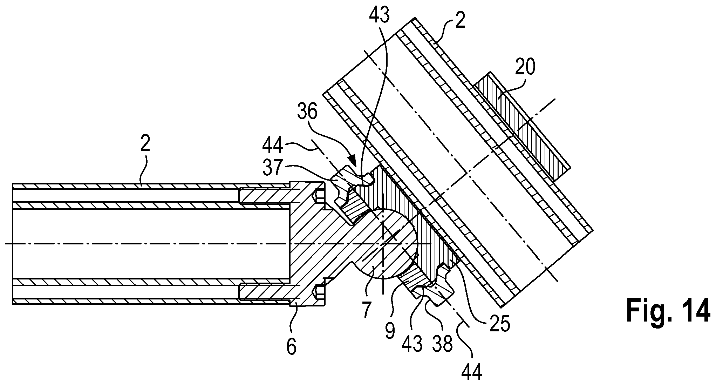

Die Fig. 12 bis 14 veranschaulichen eine modifizierte Anordnung miteinander verbundener Adapterteile 5, 19. Die Adapterteile sind in einer stumpfwinkligen Winkelstellung zueinander verbunden. Auch ist der Sockel 6 mit der Stange 2 mittels vier Schrauben 45 verschraubt. Im Übrigen ist diese Ausführungsform entsprechend der vorbeschriebenen Ausführungsform gestaltet. Es wird insofern auf die vorgenannten Bezugsziffern verwiesen, die auch für diese Ausführungsform Verwendung finden.

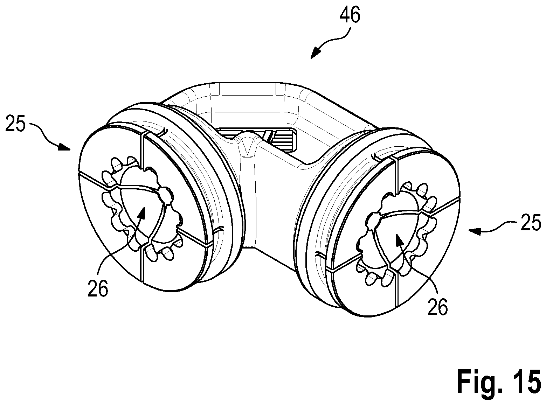

Fig. 15 veranschaulicht ein gegenüber dem Adapterteil 19 modifiziertes Adapterteil 46, das bei der Tragvorrichtung 1 gemäß Fig. 1 Verwendung findet, allerdings zwei Ansätze 25 mit teilkugelförmigen Ausnehmungen 26 aufweist. Dieses Adapterteil 46 dient somit dem Verbinden mit zwei Adapterteilen, vorstehend im Bereich des einen Ansatzes 25, dem Verbinden mit dem Adapterteil 5 im Sinne des Adapterpaares 3, während im Bereich des anderen Ansatzes 25 eine nicht winkelveränderliche Anbindung an ein Adapterteil gemäß dem Adapterpaar 4 erfolgt.

Die beschriebene Ausbildung eines Ansatzes 25 ermöglicht somit sowohl die gelenkige Anbindung des Adapterteils 5 mit dem kugelförmigen Ansatz 7 als auch die nichtgelenkige Anbindung eines Adapterteils, das einen Ansatz aufweist, der gemäß dem Ansatz 25 ausgebildet ist. In diesem Fall dienen die wellenförmigen Vertiefungen 47 der Aufnahme einer als Drehsicherung dienenden, nicht gezeigten Scheibe, die in die Vertiefungen 7 beider zusammenwirkender Ansätze 25 eingesetzt wird, wie es zur EP 2 778 492 A1 beschrieben ist.

Die Ausführung des Adapterteils 46 ermöglicht aufgrund der Knickung im Adapterteil 46 eine Anordnung von diesem Adapterteil 46 zugeordneten Stangen 2 in einem spitzeren Winkel als bei Verwendung eines Adapterteils 19.

### Bezugszeichenliste

- 1: Tragvorrichtung
- 2: Stange
- 3: Adapterpaar
- 4: Adapterpaar
- 5: Adapterteil
- 6: Sockel
- 7: Kugelförmiger Ansatz
- 8: Schraube
- 9: Klemmring
- 10: Stirnfläche
- 11: Stirnfläche
- 12: Umfangsfläche
- 13: Umfangsfläche
- 14: Umfangsfläche
- 15: Ringbereich
- 16: Schlitz
- 17: Schlitz
- 18: Schlitz
- 19: Adapterteil
- 20: Basisabschnitt
- 21: Schlitz
- 22: Schraube
- 23: Schenkel
- 24: Schenkel
- 25: Ansatz
- 26: Teilkugelförmige Ausnehmung
- 27: Aufnahme
- 28: Stirnfläche
- 29: Stirnfläche
- 30: Umfangsfläche
- 31: Umfangsfläche
- 32: Umfangsfläche
- 33: Schwächungsbereich
- 34: Schwächungsbereich
- 35: Schlitz
- 36: Verbindungsschelle
- 37: Schenkel
- 38: Schenkel
- 39: Gelenk
- 40: Lageransatz
- 41: Lagerbolzen
- 42: Schraube
- 43: Kontaktfläche
- 44: Wirkebene
- 45: Schraube
- 46: Adapterteil
- 47: Vertiefung

## Patentansprüche

1. Verbindung zweier Adapterteile (5, 19) einer modular aufbaubaren Tragvorrichtung (1) zum Tragen von Werkzeugen, Werkstücken oder dergleichen, mit einem ersten Adapterteil (19), das einen endseitigen Ansatz (25) mit einer teilkugelförmigen Ausnehmung (26) aufweist, einem zweiten Adapterteil (5), das einen endseitigen kugelförmigen Ansatz (7) zum Einsetzen in die teilkugelförmige Ausnehmung (26) des ersten Adapterteils (19) sowie einen am kugelförmigen Ansatz (7), auf dessen der teilkugelförmigen Ausnehmung (26) abgewandten Hälfte, anliegenden Klemmring (9) aufweist, einer Verbindungsschelle (36), die den Ansatz (25) des ersten Adapterteils (19) und den Klemmring (9) des zweiten Adapterteils (5) auf einander abgewandten Seiten hintergreift sowie axial und radial zueinander festlegt, wobei der Ansatz (25) des ersten Adapterteils (19) und der Klemmring (9) jeweils mindestens einen Schwächungsbereich (34, 33) zum Verformen von Ansatz (25) des ersten Adapterteils (19) und Klemmring (9), bei Einwirkung auf diese mittels der Verbindungsschelle (36), aufweist.

2. Verbindung nach Anspruch 1, wobei die Ausnehmung (26) als Halbkugel ausgebildet ist.

3. Verbindung nach Anspruch 1 oder 2, wobei die Kontaktflächen von teilkugelförmiger Ausnehmung (26) und kugelförmigem Ansatz (7) und/oder die Kontaktflächen von kugelförmigem Ansatz (7) und Klemmring (9) aneinander angepasst sind.

4. Verbindung nach einem der Ansprüche 1 bis 3, wobei der Ansatz (25) des ersten Adapterteils (19) und der Klemmring (9) jeweils mehrere Schwächungsbereiche (34, 33) aufweisen.

5. Verbindung nach einem der Ansprüche 1 bis 4, wobei der Ansatz (25) des ersten Adapterteils (19) Schwächungsbereiche (34), die als eine oder mehrere Schlitze (35) im Ansatz (25) ausgebildet sind, aufweist, wobei der jeweilige Schlitz (35) im Ansatz (25) sich senkrecht zur Wirkebene (44) der Verbindungsschelle (36) erstreckt.

6. Verbindung nach Anspruch 5, wobei der jeweilige Schlitz (35) sich senkrecht zur Wirkebene (44) der Verbindungsschelle (36) bis außerhalb des Einwirkbereichs der Verbindungsschelle (36) auf dem Ansatz (25) des ersten Adapterteils (19) erstreckt.

7. Verbindung nach Anspruch 5 oder 6, wobei der jeweilige Schlitz (35) sich senkrecht zur Wirkebene (44) der Verbindungsschelle (36) über die gesamte Tiefe der teilkugelförmigen Ausnehmung (26) erstreckt.

8. Verbindung nach einem der Ansprüche 5 bis 7, wobei sich der jeweilige Schlitz (35) radial von der teilkugelförmigen Ausnehmung (26) im ersten Adapterteil (19) bis zur radial äußeren Begrenzung des ersten Adapterteils (19), bezogen auf dessen Kontaktbereich mit der Verbindungsschelle (36), erstreckt.

9. Verbindung nach einem der Ansprüche 5 bis 8, wobei benachbarte Schlitze (35, 35) in demselben Kreiswinkel zueinander angeordnet sind, insbesondere vier Schlitze (35) unter einem Kreiswinkel von jeweils 90° zueinander angeordnet sind.

10. Verbindung nach einem der Ansprüche 1 bis 9, wobei der Ansatz (25) des ersten Adapterteils (19) auf seiner dem zweiten Adapterteil (5) zugewandten Seite eine ebene Oberfläche (28) aufweist, sowie der Klemmring (9) des zweiten Adapterteils (5) auf seiner dem Ansatz (25) des ersten Adapterteils zugewandten Seite eine ebene Oberfläche (10) aufweist, wobei diese ebenen Oberflächen (10, 28) parallel zueinander angeordnet sind, insbesondere die beiden Adapterteile (5, 19) sich im Bereich dieser Oberflächen (10, 28) kontaktieren.

11. Verbindung nach einem der Ansprüche 1 bis 10, wobei der Klemmring (9) in einem Ringbereich mittels eines sich radial erstreckenden Schlitzes (16) unterbrochen ist

12. Verbindung nach einem der Ansprüche 1 bis 11, wobei der Klemmring (9) einen Schwächungsbereich (33) aufweist, der durch mindestens einen sich über einen Teil der radialen Stärke des Klemmrings (9) erstreckenden Schlitz (16, 17, 18) im Klemmring (9) gebildet ist.

13. Verbindung nach Anspruch 12, wobei in diesem Schwächungsbereich (33) des Klemmrings (9) mehrere, insbesondere zwei Schlitze (17, 18) im Klemmring (9) gebildet sind, wobei der eine Schlitz (18) von radial innen in den Klemmring (9) ragt und der andere Schlitz (17) von radial außen in den Klemmring (9) ragt.

14. Verbindung nach einem der Ansprüche 11 bis 13, wobei der den Klemmring unterbrechende Schlitz (16) und mindestens ein anderer Schlitz (17, 18) des Klemmrings (9) diametral angeordnet sind.

15. Verbindung nach einem der Ansprüche 1 bis 14, wobei sich die Schlitze (16, 17, 18) im Klemmring (9) über dessen axiale Erstreckung erstrecken.

## Claims

1. Connection between two adapter parts (5, 19) of a modular-construction supporting apparatus (1) for supporting tools, workpieces or the like, having a first adapter part (19), which has an end-side extension (25) with a partially spherical recess (26), having a second adapter part (5), which has an end-side spherical extension (7) for insertion into the partially spherical recess (26) of the first adapter part (19) and also has a clamping ring (9), which butts against the spherical extension (7), over the half thereof which is directed away from the partially spherical recess (26), and having a connecting clamp (36), which engages behind the extension (25) of the first adapter part (19) and the clamping ring (9) of the second adapter part (5), on mutually remote sides of the same, and secures them axially and radially in relation to one another, wherein the extension (25) of the first adapter part (19) and the clamping ring (9) each have at least one weakening region (34, 33) so that the extension (25) of the first adapter part (19) and the clamping ring (9) are deformed when the connecting clamp (36) acts thereon.

2. Connection according to Claim 1, wherein the recess (26) is designed in the form of a hemisphere.

3. Connection according to Claim 1 or 2, wherein the contact surfaces of the partially spherical recess (26) and spherical extension (7) and/or the contact surfaces of the spherical extension (7) and clamping ring (9) are adapted to one another.

4. Connection according to one of Claims 1 to 3, wherein the extension (25) of the first adapter part (19) and the clamping ring (9) each have a plurality of weakening regions (34, 33).

5. Connection according to one of Claims 1 to 4, wherein the extension (25) of the first adapter part (19) has weakening regions (34), which are designed in the form of one or more slits (35) in the extension (25), wherein the respective slit (35) in the extension (25) extends perpendicularly to the plane (44) of action of the connecting clamp (36).

6. Connection according to Claim 5, wherein the respective slit (35) extends, perpendicularly to the plane (44) of action of the connecting clamp (36), to outside the region of action of the connecting clamp (36) on the extension (25) of the first adapter part (19).

7. Connection according to Claim 5 or 6, wherein the respective slit (35) extends, perpendicularly to the plane (44) of action of the connecting clamp (36), over the entire depth of the partially spherical recess (26).

8. Connection according to one of Claims 5 to 7, wherein the respective slit (35) extends radially from the partially spherical recess (26) in the first adapter part (19) to the radially outer boundary of the first adapter part (19), as seen in relation to the region of contact of the latter with the connecting clamp (36).

9. Connection according to one of Claims 5 to 8, wherein adjacent slits (35, 35) are arranged at the same central angle in relation to one another, in particular four slits (35) are arranged at a central angle of in each case 90° in relation to one another.

10. Connection according to one of Claims 1 to 9, wherein the extension (25) of the first adapter part (19), on its side which is directed towards the second adapter part (5), has a planar surface (28), and the clamping ring (9) of the second adapter part (5), on its side which is directed towards the extension (25) of the first adapter part, has a planar surface (10), wherein said planar surfaces (10, 28) are arranged parallel to one another, in particular the two adapter parts (5, 19) contact each other in the region of said surfaces (10, 28).

11. Connection according to one of Claims 1 to 10, wherein the clamping ring (9) is interrupted in one region of the ring by means of a radially extending slit (16).

12. Connection according to one of Claims 1 to 11, wherein the clamping ring (9) has a weakening region (33) which is formed by at least one slit (16, 17, 18) extending in the clamping ring (9) over part of the radial thickness of the clamping ring (9).

13. Connection according to Claim 12, wherein a plurality of, in particular two, slits (17, 18) are formed in the clamping ring (9) in said weakening region (33) of the clamping ring (9), wherein the one slit (18) projects into the clamping ring (9) in the radial direction from the inside and the other slit (17) projects into the clamping ring (9) in the radial direction from the outside.

14. Connection according to one of Claims 11 to 13, wherein the slit (16), which interrupts the clamping ring, and at least one other slit (17, 18) of the clamping ring (9) are arranged diametrically.

15. Connection according to one of Claims 1 to 14, wherein the slits (16, 17, 18) in the clamping ring (9) extend over the axial extent of said clamping ring.

## Revendications

1. Liaison de deux pièces d'adaptation (5, 19) d'un dispositif de support modulaire (1) pour le support d'outils, de pièces ou similaires, comprenant une première pièce d'adaptation (19) qui présente un insert terminal (25) avec un évidement (26) partiellement sphérique, une deuxième pièce d'adaptation (5) qui présente un insert de forme sphérique terminal (7) pour l'insertion dans l'évidement (26) partiellement sphérique de la première pièce de lactation (19) ainsi qu'une bague de serrage (9) s'appliquant contre l'insert de forme sphérique (7) sur sa moitié opposée à l'évidement (26) partiellement sphérique, un collier de liaison (36) qui vient en prise par l'arrière avec l'insert (25) de la première partie d'adaptation (19) et avec la bague de serrage (9) de la deuxième pièce d'adaptation (5) sur des côtés opposés l'un à l'autre et qui les fixent axialement et radialement l'un par rapport à l'autre, l'insert (25) de la première pièce d'adaptation (19) et la bague de serrage (9) présentant à chaque fois au moins une région d'affaiblissement (34, 33) pour déformer l'insert (25) de la première partie d'adaptation (19) et la bague de serrage (9) lors d'une action sur ceux-ci au moyen du collier de liaison (36).

2. Liaison selon la revendication 1, dans laquelle l'évidement (26) est réalisé sous forme de demi-sphère.

3. Liaison selon la revendication 1 ou 2, dans laquelle les surfaces de contact de l'évidement (26) partiellement sphérique et de l'insert de forme sphérique (7) et/ou les surfaces de contact de l'insert de forme sphérique (7) et de la bague de serrage (9) sont adaptées les unes aux autres.

4. Liaison selon l'une quelconque des revendications 1 à 3, dans laquelle l'insert (25) de la première pièce d'adaptation (19) et de la bague de serrage (9) présentent à chaque fois plusieurs régions d'affaiblissement (34, 33).

5. Liaison selon l'une quelconque des revendications 1 à 4, dans laquelle l'insert (25) de la première pièce d'adaptation (19) présente des régions d'affaiblissement (34) qui sont réalisées sous forme d'une ou plusieurs fentes (35) dans l'insert (25), la fente respective (35) dans l'insert (25) s'étendant perpendiculairement au plan d'action (44) du collier de liaison (36).

6. Liaison selon la revendication 5, dans laquelle la fente respective (35) s'étend perpendiculairement au plan d'action (44) du collier de liaison (36) jusqu'à l'extérieur de la région d'action du collier de liaison (36) sur l'insert (25) de la première pièce d'adaptation (19).

7. Liaison selon la revendication 5 ou 6, dans laquelle la fente respective (35) s'étend perpendiculairement au plan d'action (44) du collier de liaison (36) sur toute la profondeur de l'évidement (26) partiellement sphérique.

8. Liaison selon l'une quelconque des revendications 5 à 7, dans laquelle la fente respective (35) s'étend radialement depuis l'évidement (26) partiellement sphérique dans la première pièce d'adaptation (19) jusqu'à la limitation radialement extérieure de la première pièce d'adaptation (19), par rapport à sa région de contact avec le collier de liaison (36).

9. Liaison selon l'une quelconque des revendications 5 à 8, dans laquelle des fentes adjacentes (35, 35) sont disposées les unes par rapport aux autres dans le même angle de cercle, en particulier quatre fentes (35) sont disposées les unes par rapport aux autres suivant un angle de cercle de respectivement 90°.

10. Liaison selon l'une quelconque des revendications 1 à 9, dans laquelle l'insert (25) de la première pièce d'adaptation (19) présente, sur son côté tourné vers la deuxième pièce d'adaptation (5), une surface plane (28), et la bague de serrage (9) de la deuxième pièce d'adaptation (5) présente, sur son côté tourné vers l'insert (25) de la première pièce adaptation, une surface plane (10), ces surfaces planes (10, 28) étant disposées parallèlement l'une à l'autre, en particulier les deux pièces d'adaptation (5, 19) étant en contact dans la région de ces surfaces (10, 28).

11. Liaison selon l'une quelconque des revendications 1 à 10, dans laquelle la bague de serrage (9) est interrompue dans une région annulaire au moyen d'une fente (16) s'étendant radialement.

12. Liaison selon l'une quelconque des revendications 1 à 11, dans laquelle la bague de serrage (9) présente une région d'affaiblissement (33) qui est formée par au moins une fente (16, 17, 18) dans la bague de serrage (9), s'étendant sur une partie de l'épaisseur radiale de la bague de serrage (9).

13. Liaison selon la revendication 12, dans laquelle, dans cette région d'affaiblissement (33) de la bague de serrage (9), sont formées plusieurs, en particulier deux, fentes (17, 18) dans la bague de serrage (9), l'une des fentes (18) pénétrant dans la bague de serrage (9) radialement depuis l'intérieur et l'autre fente (17) pénétrant dans la bague de serrage (9) radialement depuis l'extérieur.

14. Liaison selon l'une quelconque des revendications 11 à 13, dans laquelle la fente (16) interrompant la bague de serrage et au moins une autre fente (17, 18) de la bague de serrage (9) sont disposées diamétralement.

15. Liaison selon l'une quelconque des revendications 1 à 14, dans laquelle les fentes (16, 17, 18) dans la bague de serrage (9) s'étendent sur son étendue axiale.
